# EUROPEAN PATENT SPECIFICATION

(11) **EP 2 415 990 B1**
(45) Date of publication and mention of the grant of the patent: **25.04.2018**
(21) Application number: 10758216.5
(22) Date of filing: 24.03.2010
(51) Int. Cl.: F02M 26/05, F02M 26/08, F02M 26/34, F02D 21/08, F02D 41/00, F02B 37/007, F02B 37/10

(54) **EXHAUST RECIRCULATION SYSTEM IN INTERNAL COMBUSTION ENGINE WITH SUPERCHARGER**
ABGASRÜCKFÜHRUNGSSYSTEM FÜR EINEN VERBRENNUNGSMOTOR MIT AUFLADER
SYSTÈME DE RECIRCULATION D'ÉCHAPPEMENT DANS UN MOTEUR À COMBUSTION INTERNE AVEC COMPRESSEUR D'ALIMENTATION

(30) Priority: 31.03.2009 JP 2009087090
(43) Date of publication of application: 08.02.2012
(73) Proprietor: Kawasaki Jukogyo Kabushiki Kaisha, Kobe-shi, Hyogo 650-8670 (JP)
(72) Inventor: HIGASHIDA, Masanori, Hyogo 650-8670 (JP); TAKATA, Hirotaka, Hyogo 650-8670 (JP); YAMAMOTO, Kanichi, Hyogo 650-8670 (JP)
(74) Representative: Leinweber & Zimmermann
(86) International application number: PCT/JP2010/002072
(87) International publication number: WO 2010/113431

(56) References cited:
- EP-A1- 1 640 596
- EP-A2- 1 302 646
- DE-A1-102004 015 108
- JP-A- 4 054 218
- JP-A- 6 323 151
- JP-A- 62 276 221
- JP-A- H05 288 069
- JP-A- 2008 175 114
- JP-A- 2008 175 114
- JP-A- 2009 002 186
- US-B1- 7 000 393

## Description

### Technical Field

The present invention relates to an exhaust gas recirculation system applied to an internal combustion engine including turbochargers, according to the precharacterizing clause of claim 1 (DE 10 2004 015 108 A1).

### Background Art

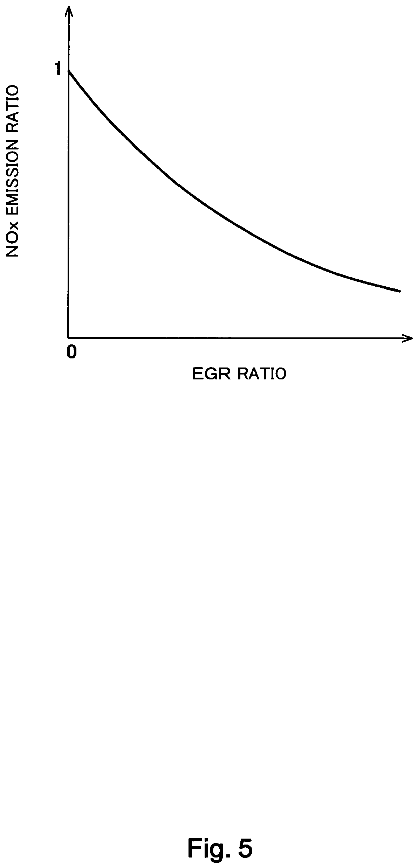

Conventionally known is an internal combustion engine to which a technology is applied for the purpose of reducing the amount of NOx emission and improving fuel economy, the technology being designed such that an exhaust gas is recirculated into the internal combustion engine. This technology is generally called "Exhaust Gas Recirculation (EGR)". In this internal combustion engine, an EGR valve is disposed on an EGR passage connecting an exhaust gas passage and a charge air or scavenge air passage. The amount of exhaust gas recirculated through the EGR passage is changeable by changing the opening degree of the EGR valve. Based on a relation in which the amount of NOx emission simply decreases as an EGR ratio increases as shown in Fig. 5, a control device of the internal combustion engine adjusts the opening degree of the EGR valve such that the amount of NOx emission becomes a desired value.

Also, an internal combustion engine including a plurality of turbochargers is well known. For example, PTL 1 discloses an internal combustion engine including two turbochargers having different capacities in consideration of the fact that the flow rate of the exhaust gas changes depending on the revolution of the internal combustion engine. This internal combustion engine uses a so-called high-pressure EGR technology in which the exhaust gas existing upstream of a turbocharger turbine is
circulated to a downstream side of a turbocharger compressor.

Based on the revolution of the internal combustion engine and the fuel injection quantity, the control device of the internal combustion engine selectively sets one of two operating modes that are a single mode in which only a small-capacity turbocharger is activated and a twin mode in which both turbochargers are activated. With this, even if the revolution of the internal combustion engine or the fuel injection quantity changes, a turbocharging performance can be achieved as high as possible in accordance with the change.

When shifting the operating mode from the single mode to the twin mode, a large-capacity turbocharger in a stop state needs to be started. Here, the control device of the internal combustion engine narrows the EGR valve when shifting to the twin mode. With this, the exhaust gas, which is to be recirculated, is supplied to the turbocharger side, and thus the flow rate necessary for prerotation of the large-capacity turbocharger can be secured.

### Citation List

### Patent Literature

PTL 1: Japanese Laid-Open Patent Application Publication No. 2008-175114

### Summary of Invention

### Technical Problem

As above, based only on the revolution and the fuel injection quantity, the conventional control device executes the control of the operations of the plurality of turbochargers included in the internal combustion engine to which the exhaust gas recirculation technology is applied. However, if the opening degree of the EGR valve is changed although the revolution and the fuel injection quantity stay the same, the amount of exhaust gas supplied to the turbocharger side changes. Therefore, it may not be possible to set an optimal operating mode which is based on the actual amount of exhaust gas supplied to the turbocharger side.

In addition, the number of operating modes which can be selectively set by the control device is two, so that it may be difficult to achieve the optimal turbocharging performance corresponding to an operation state. Especially, in the internal combustion engine configured such that the amount of exhaust gas recirculated is changeable, a ratio (so-called EGR ratio) of the amount of exhaust gas recirculated to the total amount of exhaust gas is an important factor for determining the amount of exhaust gas supplied to the turbocharger side. Here, there is a need for realization of fine control of the turbocharger in accordance with the change in the EGR ratio.

Further, in accordance with the conventional control device, in the case of performing the prerotation of the turbocharger when shifting the operating mode, the opening degree of the EGR valve is changed to change the amount of exhaust gas recirculated. As described above, the opening degree of the EGR valve is adjusted basically for the purpose of suppressing the amount of NOx emission to the desired value. Therefore, if the opening degree of the EGR valve is changed in order to shift the operating mode of the turbocharger, this basic purpose may not be achieved.

Here, an object of the present invention is to achieve, regardless of the operation state, the high turbocharging performance of the internal combustion engine with turbochargers, the technology of recirculating the exhaust gas being applied to the internal combustion engine. Another object of the present invention is to achieve the high turbocharging performance even during the operation at a high EGR ratio by which the amount of gas passing through the turbocharger decreases significantly. Yet another object of the present invention is to prevent the interference of the control of the operation of the turbocharger and the control for determining the EGR ratio.

### Solution to Problem

According to the invention, the above problem is solved by an exhaust gas recirculation system as laid down in claim 1. Preferred embodiments are claimed by the dependent claims.

With this configuration, even if the EGR ratio is changed, and this changes the amount of exhaust gas supplied to the turbocharger side, the optimal turbocharger operation mode can be selected in accordance with the change in the amount of exhaust gas. Moreover, since whether to activate each of the plurality of turbochargers is determined, the number of combinations of the activated turbochargers is large. Therefore, the operation mode of the turbocharger can be finely changed based on the load of the internal combustion engine and the EGR ratio, and the turbocharging performance can be achieved as high as possible depending on the operation state at the
time.

At least one of the plurality of turbochargers may be provided with a variable nozzle configured to adjust pressure of the compressed gas generated by the turbocharger. The turbocharging performance can be further increased by optimally controlling the variable nozzle.

The exhaust gas passage may include an exhaust gas integrated passage extending from the internal combustion engine and a plurality of branched exhaust gas passages which are branched from the exhaust gas integrated passage and respectively connected to the plurality of turbochargers, and the exhaust gas recirculation system may further include exhaust gas on-off valves respectively disposed on the branched exhaust gas passages, wherein the control device may drive the plurality of exhaust gas on-off valves to open the branched exhaust gas passage connected to the turbocharger which needs to be activated and to close the branched exhaust gas passage connected to the turbocharger which needs to be stopped. With this, as above, it is possible to realize a configuration for selecting whether to activate each of the plurality of turbochargers.

The charge air or scavenge air passage may include a plurality of branched passages respectively connected to the plurality of turbochargers and an integrated passage extending toward the internal combustion engine from where the plurality of branched passages meet, and the exhaust gas recirculation system may further include on-off valves respectively disposed on the branched passages, wherein the control device may drive the plurality of on-off valves to open the branched passage connected to the turbocharger which needs to be activated and to close the branched passage connected to the turbocharger which needs to be stopped. With this, the compressed gas from the turbocharger which needs to be activated is supplied through the charge air or scavenge air passage to the internal combustion engine, and the compressed gas can be prevented from flowing back to the turbocharger which needs to be stopped.

The exhaust gas recirculation system may further include a compressed air passage formed independently from the exhaust gas passage to supply compressed air for prerotation to the plurality of turbochargers, wherein when starting the turbocharger which needs to be activated, the control device may supply, in a predetermined period of time, the compressed air for the prerotation through the compressed air passage to the turbocharger. With this, it becomes unnecessary to utilize the exhaust gas for the prerotation of the turbocharger which needs to be activated. To be specific, for example, it becomes unnecessary to reduce the EGR ratio and supply the exhaust gas, which should be recirculated, to the turbocharger side. Thus, it is possible to prevent the control of the operation of the turbocharger from interfering with the control for determining the EGR ratio for the purpose of reducing the amount of NOx emission.

The exhaust gas recirculation system may further include: a plurality of escape passages respectively connected to downstream sides of compressors of the plurality of turbochargers to release the compressed gas from the turbochargers to atmosphere; and escape valves respectively disposed on the escape passages, wherein: while the predetermined period of time elapses, the control device may drive the escape valve to open the escape passage corresponding to the turbocharger which needs to be activated; and after the predetermined period of time has elapsed, the control device may drive the escape valve to close the escape passage. With this, it is possible to avoid the occurrence of the surging when performing the prerotation of the turbocharger which needs to be activated.

The charge air or scavenge air passage may include a plurality of branched passages respectively connected to the plurality of turbochargers and an integrated passage extending toward the internal combustion engine from where the plurality of branched passages meet, and the exhaust gas recirculation system may further include: on-off valves respectively disposed on the branched passages; a compressed air passage formed independently from the exhaust gas passage to supply compressed air for prerotation to the plurality of turbochargers; a plurality of escape passages respectively connected to downstream sides of compressors of the plurality of turbochargers to release the compressed gas from the turbochargers to atmosphere; and escape valves respectively disposed on the escape passages, wherein: when starting the turbocharger which needs to be activated, the control device may supply, in a predetermined period of time, the compressed air for the prerotation through the compressed air passage to the turbocharger; while at least the predetermined period of time elapses, the control device may drive the escape valve to open the escape passage corresponding to the turbocharger which needs to be started and drives the on-off valve to close the branched passage connected to the turbocharger which needs to be activated; and after the predetermined period of time has elapsed, the control device may drive the escape valve to close the escape passage and drives the on-off valve to open the branched passage. With this, it is possible to prevent the compressed gas from being supplied from the compressor of the turbocharger to the internal combustion engine during the prerotation of the turbocharger which needs to be activated, and it is also possible to avoid unstable behavior of the internal combustion engine. In addition, it is possible to prevent the compressed gas from flowing back to the turbocharger from the other turbocharger during the prerotation of the turbocharger, and the prerotation of the turbocharger can be stably performed.

The plurality of turbochargers may be the same in capacity as one another. Moreover, the plurality of turbochargers may be different in capacity from one another. When the plurality of turbochargers are different in capacity from one another, it is possible to execute a control operation in which, for example, the small-capacity turbocharger is activated at the time of a low load and the large-capacity turbocharger is activated at the time of a middle or high load. Thus, a high turbocharging performance can be achieved regardless of the change in the operation state.

The control device may adjust the EGR ratio within a range between a predetermined lower limit and a predetermined upper limit, and a capacity of a smallest-capacity turbocharger among the plurality of turbochargers may be set based on a flow rate of the exhaust gas introduced to the smallest-capacity turbocharger when the load of the internal combustion engine is a low load and the EGR ratio is adjusted to the upper limit. A case where the load of the internal combustion engine is the low load and the EGR ratio is set to the upper limit is a circumstance in which the flow rate of the exhaust gas supplied to the turbocharger side is minimum. Since the capacities of the turbochargers are set so as to correspond to such circumstance, the high turbocharging performance can be achieved under such circumstance.

The plurality of turbochargers may be constituted by a first turbocharger and a second turbocharger which is smaller in capacity than the first turbocharger, and based on the load of the internal combustion engine and the EGR ratio, the control device may select one of a state where both the first and second turbochargers are activated, a state where only the first turbocharger is activated, and a state where only the second turbocharger is activated. With this, in the internal combustion engine including two turbochargers, the operations of the turbochargers can be finely controlled based on the operation state.

The exhaust gas recirculation system may further include a variable nozzle configured to adjust pressure of the compressed gas supplied from the first turbocharger, wherein: when the EGR ratio is zero, the control device may activate at least the first turbocharger; and when the EGR ratio is higher than zero and lower than a predetermined EGR threshold, the control device may activate at least the first turbocharger and activates the variable nozzle such that the pressure of the compressed gas from the first turbocharger becomes equal to or higher than a predetermined required pressure. With this, in a circumstance in which the amount of exhaust gas recirculated is zero, and the entire exhaust gas is supplied to the turbocharger, the turbocharging performance can be achieved as high as possible by activating at least the large-capacity first turbocharger. By providing the variable nozzle at the first turbocharger, a state where the optimal turbocharging performance is achieved can be maintained by the operation of the variable nozzle when the EGR ratio gradually increases from zero.

When the load of the internal combustion engine is equal to or higher than a predetermined load threshold and the EGR ratio is lower than a predetermined EGR threshold, the control device may activate both the first and second turbochargers, and when the load of the internal combustion engine is equal to or higher than the predetermined load threshold and the EGR ratio is equal to or higher than the EGR threshold, the control device may activate only the first turbocharger. With this, when the load of the internal combustion engine is the high load, and the EGR ratio is low or zero, a comparatively large amount of exhaust gas is supplied to the turbocharger side. Therefore, the high turbocharging performance can be achieved by activating the two turbochargers. When the EGR ratio is high, the small-capacity second turbocharger is stopped. Thus, it is possible to maintain a state where the optimal turbocharging performance is achieved.

When the load of the internal combustion engine is lower than a predetermined load threshold and the EGR ratio is lower than a predetermined EGR threshold, the control device may activate only the first turbocharger, and when the load of the internal combustion engine is lower than the predetermined load threshold and the EGR ratio is equal to or higher than the EGR threshold, the control device may activate only the second turbocharger. With this, when the load of the internal combustion engine is the low load, and the EGR ratio is high, the amount of exhaust gas supplied to the turbocharger side becomes small. Therefore, the high turbocharging performance can be achieved by activating only the small-capacity second turbocharger. When the EGR ratio is low or zero, only the first turbocharger is activated instead of the second turbocharger. With this, it is possible to maintain a state where the optimal turbocharging performance is achieved.

The above object, other objects, features and advantages of the present invention will be made clear by the following detailed explanation of preferred embodiments with reference to the attached drawings.

### Advantageous Effects of Invention

As above, in accordance with the present invention, the internal combustion engine with turbochargers using the technology of recirculating the exhaust gas can achieve a high turbocharging performance depending on operation states, such as the load of the internal combustion engine and the EGR ratio.

### Brief Description of Drawings

[Fig. 1] Fig. 1 is a block diagram showing the configuration of an exhaust gas recirculation system according to an embodiment of the present invention.
[Fig. 2] Fig. 2 is a block diagram showing the configuration of a control system of the system shown in Fig. 1.
[Fig. 3] Fig. 3 is an explanatory diagram showing correspondence relations among a load of the internal combustion engine, an EGR ratio, and operation modes of turbochargers.
[Fig. 4] Fig. 4 is a flow chart showing a procedure of turbo control executed by a turbo controller shown in Fig. 2.
[Fig. 5] Fig. 5 is a graph showing a relation between the EGR ratio and a NOx emission ratio.

### Description of Embodiments

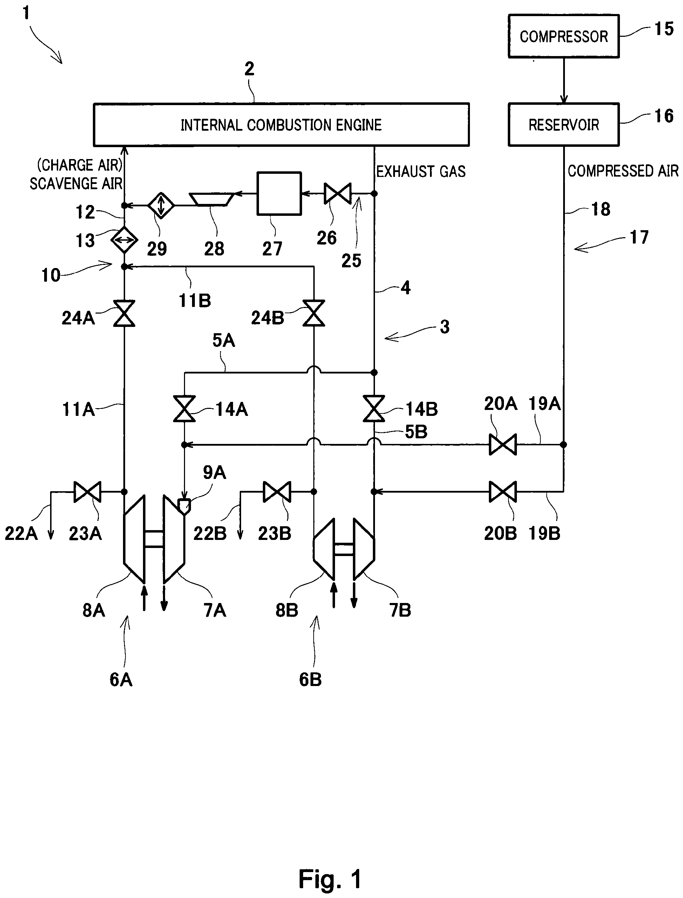

Hereinafter, an embodiment of the present invention will be explained in reference to the drawings. An exhaust gas recirculation system (hereinafter simply referred to as a "system") 1 according to the embodiment of the present invention shown in Fig. 1 is applied to an internal combustion engine 2 including turbochargers. The internal combustion engine 2 may be a two-cycle engine or a four-cycle engine and may be a gasoline engine, a gas engine, or a diesel engine. The internal combustion engine 2 may be utilized as a power unit of not only transportation machines, such as four-wheel vehicles and ships, but also the other various devices. Herein, for convenience sake, the internal combustion engine 2 is regarded as a marine two-cycle diesel engine.

The internal combustion engine 2 includes a combustion chamber, not shown. An exhaust gas passage 3 for introducing an exhaust gas extends from the combustion chamber. The exhaust gas passage 3 includes one integrated exhaust gas passage 4 extending from the internal combustion engine 2 and two branched exhaust gas passages 5A and 5B which branch and extend from the integrated exhaust gas passage 4.

The branched exhaust gas passages 5A and 5B are respectively connected to turbochargers 6A and 6B. In other words, the system 1 includes two turbochargers 6A and 6B, and the turbochargers 6A and 6B are connected in parallel to the integrated exhaust gas passage 4 via the respective branched exhaust gas passages 5A and 5B.

The turbochargers 6A and 6B are different in capacity from each other. Hereinafter, the turbocharger 6A having a large capacity is called a "first turbocharger 6A", and the turbocharger 6B having a small capacity is called a "second turbocharger 6B". In addition, the branched exhaust gas passage 5A connected to the first turbocharger 6A is called a "first branched exhaust gas passage 5A", and the branched exhaust gas passage 5B connected to the second turbocharger 6B is called a "second branched exhaust gas passage 5B".

The first turbocharger 6A includes a turbine 7A and a compressor 8A. The turbine 7A is rotated by the exhaust gas flowing through the first branched exhaust gas passage 5A. The compressor 8A is rotated by the transfer of a rotational torque of the turbine 7A. Thus, the compressor 8A compresses the air. A variable nozzle 9A configured to change a stream cross section of the exhaust gas flowing into the turbine 7A is provided at an entrance portion of the turbine 7A. The pressure of the compressed gas flowing out from the compressor 8A is adjustable by the operation of the variable nozzle 9A.

Since the second turbocharger 6B is the same in configuration as the first turbocharger 6A except that the second turbocharger 6B does not include the variable nozzle, an explanation thereof is omitted. In Fig. 1, reference signs 7B and 8B respectively denote a turbine and compressor of the second turbocharger 6B.

A scavenge air passage 10 configured to supply the compressed gas from the turbochargers 6A and 6B to the combustion chamber of the internal combustion engine 2 is connected to the turbochargers 6A and 6B. If the internal combustion engine is a four-cycle engine, these turbochargers are connected to a charge air passage.

The scavenge air passage 10 includes a first branched scavenge air passage 11A extending from the compressor 8A of the first turbocharger 6A, a second branched scavenge air passage 11B extending from the compressor 8B of the second turbocharger 6B, and one integrated scavenge air passage 12 extending toward the internal combustion engine 2 from where the branched scavenge air passages 11A and 11B meet. To be specific, the turbochargers 6A and 6B are connected in parallel to the integrated scavenge air passage 12 via the branched scavenge air passages 11A and 11B.

Therefore, in accordance with the system 1, each of the turbochargers 6A and 6B can compress the air by using the energy of the exhaust gas discharged from the internal combustion engine 2 to flow through the exhaust gas passage 3 and can supply the high-temperature compressed gas through the scavenge air passage 10 to the internal combustion engine 2. An air cooler 13 is disposed on the integrated scavenge air passage 12. The high-temperature compressed gas from the turbochargers 6A and 6B is cooled by the air cooler 13 and is then supplied to the internal combustion engine 2.

The system 1 includes a first exhaust gas on-off valve 14A configured to open and close the first branched exhaust gas passage 5A and a second exhaust gas on-off valve 14B configured to open and close the second branched exhaust gas passage 5B. When the first exhaust gas on-off valve 14A opens the first branched exhaust gas passage 5A, the exhaust gas is supplied through the first branched exhaust gas passage 5A to the first turbocharger 6A, and the first turbocharger 6A can be activated. In contrast, when the first exhaust gas on-off valve 14A closes the first branched exhaust gas passage 5A, the first turbocharger 6A can be stopped. The same is true for the relation between the state of the second exhaust gas on-off valve 14B and the operation of the second turbocharger 6B.

A compressed air passage 17 is connected to the branched exhaust gas passages 5A and 5B. The compressed air passage 17 is used for turbocharger prerotation and extends from a reservoir 16 configured to accumulate the compressed air generated by a compressor 15. The compressed air passage 17 for the prerotation includes an integrated compressed air passage 18 extending from the reservoir 16, a first branched compressed air passage 19A branched from the integrated compressed air passage 18 and connected to the first branched exhaust gas passage 5A, and a second branched compressed air passage 19B connected to the second branched exhaust gas passage 5B.

The reservoir 16 may be used exclusively for the prerotation of the turbocharger or may be used for the prerotation of the turbocharger and the driving of the other device. A ship contains a large number of devices driven by utilizing the compressed air, and reservoirs are provided so as to correspond to such devices. Therefore, one of the reservoirs provided in the vicinity of the internal combustion engine 2 can be easily utilized for the prerotation of the turbocharger, and the necessity of providing the exclusive reservoir for the prerotation of the turbocharger is small.

Downstream ends of the branched compressed air passages 19A and 19B are respectively connected to the first branched exhaust gas passage 5A and the second branched exhaust gas passage 5B, and the compressed air stored in the reservoir 16 can be supplied to the turbines 7A and 7B of the turbochargers 6A and 6B. In other words, the turbochargers 6A and 6B are connected in parallel to the reservoir 16 via the branched exhaust gas passages 5A and 5B and the branched compressed air passages 19A and 19B.

The system 1 includes a first compressed air on-off valve 20A configured to open and close the first branched compressed air passage 19A and a second compressed air on-off valve 20B configured to open and close the second branched compressed air passage 19B. When the first compressed air on-off valve 20A opens the first branched compressed air passage 19A, the compressed air is supplied to the turbine 7A of the first turbocharger 6A, and the turbine 7A can be rotated by the compressed air. In contrast, when the first compressed air on-off valve 20A closes the first branched compressed air passage 19A, the compressed air cannot be supplied to the turbine 7A. The same is true for the relation between the state of the second compressed air on-off valve 19B and the operation of the turbine 7B of the second turbocharger 6B.

First and second escape passages 22A and 22B configured to release the compressed gas to the atmosphere are respectively connected to the branched scavenge air passages 11A and 11B, which are respectively connected to the compressors 8A and 8B of the turbochargers 6A and 6B. The system 1 includes a first escape valve 23A configured to open and close the first escape passage 22A and a second escape valve 23B configured to open and close the second escape passage 22B. When the first escape valve 23A opens the first escape passage 22A, the compressed gas in the first branched scavenge air passage 11A is discharged through the first escape passage 22A to the outside. In contrast, when the first escape valve 23A closes the first escape passage 22A, the compressed gas in the first branched scavenge air passage 11A can be prevented from being discharged to the outside. Further, the system 1 includes a first scavenge air on-off valve 24A configured to open and close the first branched scavenge air passage 11A and a second scavenge air on-off valve 24B configured to open and close the second branched scavenge air passage 11B. When the first scavenge air on-off valve 24A opens the first branched scavenge air passage 11A, the compressed gas in the first branched scavenge air passage 11A can be supplied to the integrated scavenge air passage 12. In contrast, when the first scavenge air on-off valve 24A closes the first branched scavenge air passage 11A, the compressed gas in the first branched scavenge air passage 11A cannot be supplied to the integrated scavenge air passage 12. The same is true for the relation between the state of the second escape valve 23B and the behavior of the compressed gas in the second branched scavenge air passage 11B and the relation between the state of the second scavenge air on-off valve 24B and the behavior of the compressed gas in the second branched scavenge air passage 11B.

The integrated exhaust gas passage 4 is connected to the integrated scavenge air passage 12 via an EGR passage 25. Therefore, the exhaust gas from the internal combustion engine 2 is introduced through the EGR passage 25 to the scavenge air passage 14 to be recirculated into the internal combustion engine 2 without flowing through the turbochargers 6A and 6B. To be specific, a so-called high-pressure EGR technology in which an EGR passage connects a portion, located upstream of a turbocharger, of an exhaust gas passage and a portion, located downstream of the turbocharger, of a charge air or scavenge air passage is applied to the system 1. Therefore, the system 1 has, for example, the advantage of being able to recirculate the exhaust gas while preventing the compressors 8A and 8B from being contaminated.

An EGR valve 26, a scrubber 27, a blower 28, and an EGR gas cooler 29 are disposed on the EGR passage 25 in this order from the exhaust gas passage 3 side. The EGR valve 26 is constituted by, for example, a butterfly valve, and the opening degree thereof is variable. By changing the opening degree of the EGR valve 26, the EGR ratio can be changed. The "EGR ratio" is a ratio of the amount of exhaust gas recirculated through the EGR passage 25 into the internal combustion engine 2 to the total amount of exhaust gas supplied from the combustion chamber to the exhaust gas passage 3. As described above in reference to Fig. 5, the NOx emission ratio can be reduced by increasing the EGR ratio. However, since the so-called high-pressure EGR technology is applied to the system 1, increasing the EGR ratio causes the decrease in the amount of exhaust gas supplied to the turbochargers 6A and 6B side.

The scrubber 27 is a device configured to remove dust from the exhaust gas, desulfurize the exhaust gas, and cool the exhaust gas to clean the exhaust gas to be recirculated. The blower 28 is a device configured to increase the pressure of the exhaust gas. In a marine diesel engine, the scavenge air pressure tends to be higher than the pressure of the exhaust gas recirculated. Therefore, when recirculating the exhaust gas into the scavenge air passage, the pressure of the exhaust gas is increased by the blower up to about the scavenge air pressure. Thus, the exhaust gas can be recirculated smoothly. A drive source of the blower 28 may be an electric motor, a crank shaft of the internal combustion engine 2, or a turbocharger different from the first and second turbochargers 6A and 6B. The high-temperature exhaust gas having flowed into the EGR passage 25 from the exhaust gas passage 3 is cooled by the EGR gas cooler 29, and the exhaust gas is recirculated through the scavenge air passage 10 into the internal combustion engine 2.

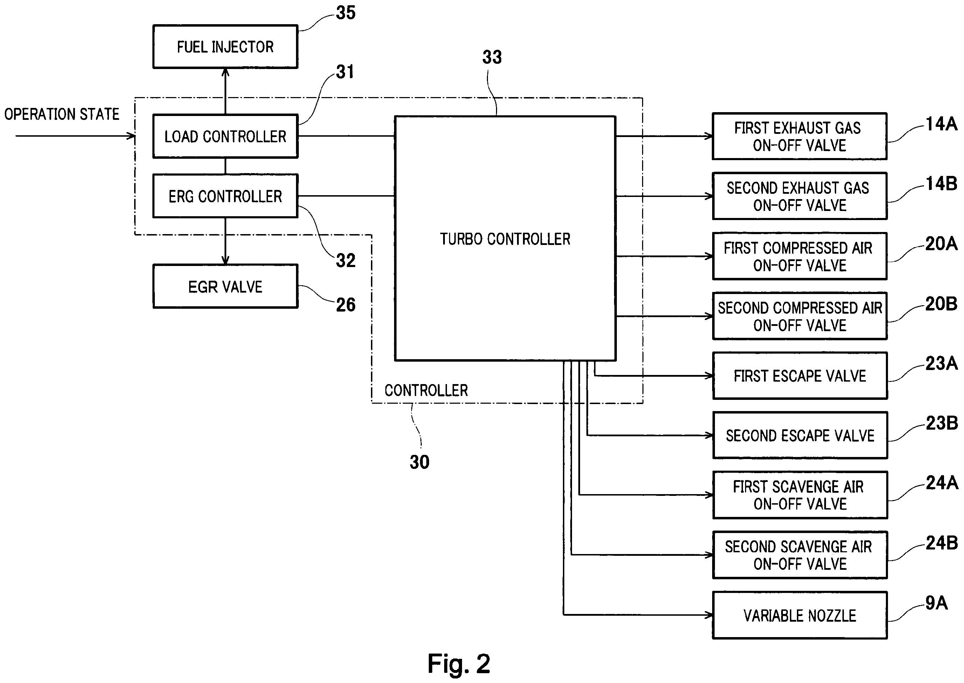

Next, a control system of the system 1 will be explained in reference to Fig. 2. The system 1 includes a controller 30 configured to totally control the operation of the internal combustion engine 2. The controller 30 includes: an input/output interface (not shown) configured to receive and output information from and to external sensors, controlled devices, and the like; a memory (not shown) configured to store control programs and input information; and a CPU (not shown) configured to execute the control programs. The control programs are, for example, a load control program of commanding a procedure for controlling the load of the internal combustion engine 2, an EGR control program of commanding a procedure for adjusting the EGR ratio, and a turbo control program of commanding a procedure for controlling the operations of the turbochargers 6A and 6B. To be specific, the controller 30 includes, as functional blocks, a load controller 31 configured to control the load of the internal combustion engine 2, an EGR controller 32 configured to adjust the EGR ratio, and a turbo controller 33 configured to control the operations of the turbochargers 6A and 6B. The controller 30 is connected to various sensors configured to detect the operation state of the system 1, the operation state needing to be referred in the control operations executed by the controllers 31 to 33. Signals indicating the operation state are output from these sensors to the controller 30.

In addition, the controller 30 is connected to, as devices controlled by the controllers 31 to 33, the variable nozzle 9A, the exhaust gas on-off valves 14A and 14B, the compressed air on-off valves 20A and 20B for the prerotation, the escape valves 23A and 23B, the scavenge air on-off valves 24A and 24B, the EGR valve 26, and a fuel injector 35. These valves may be driven by electric means or pneumatic means. Whether each valve is a normally-open valve or a normally-closed valve is not limited.

The load controller 31 calculates a command value of the fuel injection quantity based on the input signal indicating the operation state of the system 1 and controls the operation of the fuel injector 35 such that the fuel injection quantity of the command value is injected to the combustion chamber. With this, the load of the internal combustion engine 2 can be controlled based on the input signal input to the controller 30.

The EGR controller 32 calculates a command value of the opening degree of the EGR valve 26 in order to adjust the EGR ratio such that the NOx emission ratio becomes a desired value based on the relation shown in Fig. 5. Then, the EGR controller 32 drives the EGR valve 26 such that the opening degree of the EGR valve 26 becomes the command value. With this, the amount of NOx emission from the internal combustion engine 2 can be suppressed to the desired value. In the present embodiment in which the internal combustion engine 2 is the marine two-cycle diesel engine, the EGR ratio is adjusted in a range from, for example, 0% to 30% by the EGR controller 32.

The turbo controller 33 determines whether to activate each of the first and second turbochargers 6A and 6B based on the load of the internal combustion engine 2 and the EGR ratio. Based on this determination, the turbo controller 33 controls the operations of the turbochargers 6A and 6B. To be specific, the turbo controller 33 drives the first and second exhaust gas on-off valves 14A and 14B and the variable nozzle 9A based on the load of the internal combustion engine 2 and the EGR ratio. Further, as described below, the turbo controller 33 also drives the compressed air on-off valves 20A and 20B for the prerotation, the escape valves 23A and 23B, and the scavenge air on-off valves 24A and 24B. The turbo controller 33 refers to the command value of the fuel injection quantity calculated by the load controller 31 for detecting the load of the internal combustion engine 2 and refers to the command value of the opening degree of the EGR valve 26 calculated by the EGR controller 32 for detecting the EGR ratio.

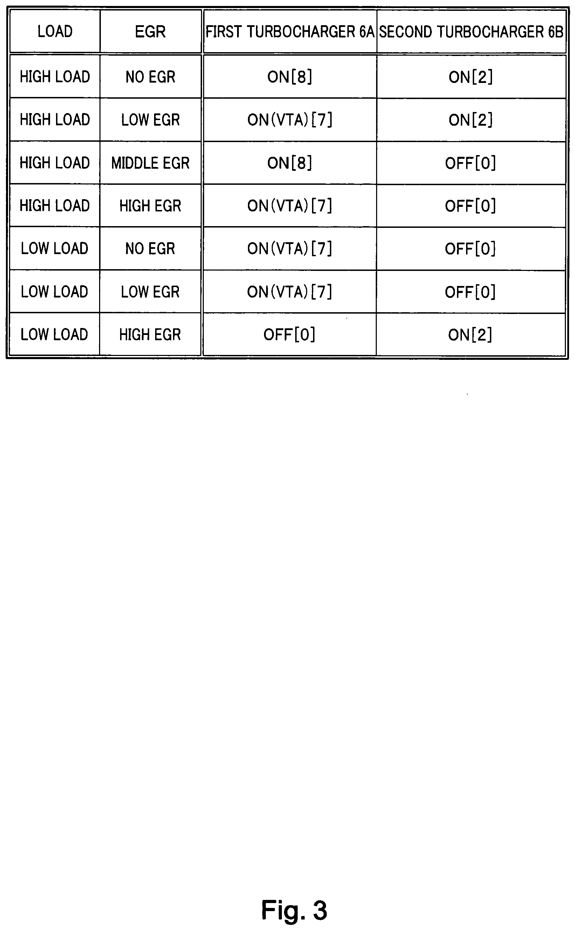

Fig. 3 shows correspondence relations among the load of the internal combustion engine 2, the EGR ratio, and the operation modes of the turbochargers. The turbo controller 33 determines which turbocharger(s) to activate on the basis that the load of the internal combustion engine 2 is which one of two states that are "High load" and "Low load" and the EGR ratio is which one of four states that are "No EGR", "Low EGR", "Middle EGR" and "High EGR". The "High load" denotes that the load of the internal combustion engine 2 is equal to or higher than a predetermined load threshold prestored in the controller 30, and the "Low load" denotes that the load of the internal combustion engine 2 is lower than the load threshold. The "No EGR" denotes that the EGR valve 26 is completely closed, the EGR ratio is zero, and the entire exhaust gas is supplied to the turbochargers 6A and 6B side. The "Low EGR" denotes that the EGR ratio is higher than zero and lower than a predetermined first EGR threshold prestored in the controller 30. The "High EGR" denotes that the EGR ratio is equal to or higher than a predetermined second EGR threshold that is higher than the first EGR threshold. The "Middle EGR" denotes that the EGR ratio is not lower than the first EGR threshold and lower than the second EGR threshold. Here, the number of states of the load and the number of states of the EGR ratio, classified in terms of control, are respectively not limited to two and four and can be suitably changed.

When the load of the internal combustion engine 2 is "High load", and the EGR ratio is "No EGR" or "Low EGR", both the first and second turbochargers 6A and 6B are activated. In this case, when the EGR ratio is "No EGR", the opening degree of the variable nozzle 9A of the first turbocharger 6A is set to a fully open state. When the EGR ratio is "Low EGR", the variable nozzle 9A is activated, and the opening degree of the variable nozzle 9A is set to a predetermined opening degree that is smaller than the fully open state. When the EGR ratio is "Middle EGR" or "High EGR", only the first turbocharger 6A is activated, and the second turbocharger 6B is stopped. When the EGR ratio is "Middle EGR", the opening degree of the variable nozzle 9A of the first turbocharger 6A is set to the fully open state. When the EGR ratio is "High EGR", the variable nozzle 9A is activated, and the opening degree of the variable nozzle 9A is set to a predetermined opening degree that is smaller than the fully open state.

When the load of the internal combustion engine 2 is "Low load", and the EGR ratio is "No EGR" or "Low EGR", only the first turbocharger 6A is activated, and the second turbocharger 6B is stopped. At the same time, the opening degree of the variable nozzle 9A is set to a predetermined opening degree that is smaller than the fully open state. When the EGR ratio is "High EGR", only the second turbocharger 6B is activated, and the first turbocharger 6A is stopped.

As above, in the present embodiment, when the load of the internal combustion engine 2 is "Low load", the operation modes of the turbochargers are determined on the basis that the EGR ratio is which one of three states that are "No EGR", "Low EGR", and "High EGR". When the load of the internal combustion engine 2 is "Low load", and the EGR ratio is "Middle EGR" defined as above, the same operation mode as in the case of "Low EGR" shown in Fig. 3 may be determined, or the same operation mode as in the case of "High EGR" may be determined. The EGR threshold used for sorting the states of the EGR ratio may be changed between when the load of the internal combustion engine 2 is "High load" and when it is "Low load".

As above, when the EGR ratio is zero, the turbo controller 33 activates at least the first turbocharger 6A. When the EGR ratio is higher than zero and lower than a predetermined EGR threshold, the turbo controller 33 activates at least the first turbocharger 6A and activates the variable nozzle 9A. As above, when the amount of exhaust gas recirculated is zero, and the entire exhaust gas is supplied to the turbocharger side, at least the large-capacity first turbocharger 6A is activated. With this, a high turbocharging performance can be achieved. When the EGR ratio slightly increases from zero to reach the state of "Low EGR", the variable nozzle 9A is activated. In this case, the variable nozzle 9A is operated such that a predetermined required scavenge air pressure is obtained. With this, it is possible to maintain a state where the optimal turbocharging performance is achieved in accordance with the change in the EGR ratio.

When the load of the internal combustion engine 2 is "High load", and the EGR ratio is "Low EGR" or "No EGR", the turbo controller 33 activates both the turbochargers 6A and 6B. When the EGR ratio is "Middle EGR" or "High EGR", the turbo controller 33 activates only the first turbocharger 6A. With this, when the load of the internal combustion engine 2 is "High load", and the EGR ratio is "Low EGR" or "No EGR", a comparatively large amount of exhaust gas is supplied to the turbocharger side. Therefore, by activating both the turbochargers 6A and 6B, the high turbocharging performance can be achieved. When the EGR ratio is "Middle EGR" or "High EGR", the small-capacity second turbocharger 6B is stopped, so that it is possible to maintain a state where the optimal turbocharging performance is achieved.

When the load of the internal combustion engine 2 is "Low load", and the EGR ratio is "Low EGR" or "No EGR", the turbo controller 33 activates only the first turbocharger 6A. When the EGR ratio is "High EGR", the turbo controller 33 activates only the second turbocharger 6B. With this, when the load of the internal combustion engine 2 is "Low load", and the EGR ratio is "High EGR", the amount of exhaust gas supplied to the turbocharger side becomes small. Therefore, by activating only the small-capacity second turbocharger 6B, the high turbocharging performance can be achieved. When the EGR ratio is "Low EGR" or "No EGR", only the large-capacity first turbocharger 6A is activated instead of the second turbocharger 6B, so that it is possible to maintain a state where the optimal turbocharging performance is achieved.

As above, when in "Low load" and "High EGR", the amount of exhaust gas supplied to the turbocharger side in the system 1 becomes the smallest. It is preferable that the flow rate of the exhaust gas introduced to the turbocharger side in this state be understood in advance in a design phase of the system 1, and the capacity of the second turbocharger 6B be set based on this flow rate. With this, the high turbocharging performance can be maintained even in a case where the amount of exhaust gas is the smallest.

Here, each of numbers in square brackets in Fig. 3 denotes an example of an allowable value of the amount of exhaust gas supplied to the turbocharger 6A or 6B when the total amount of exhaust gas when in "High load" and "No EGR" is set to 10. In other words, the capacity of each of the turbochargers 6A and 6B is such that the exhaust gas can be supplied up to the numbers in the square brackets. As above, when in "High load" and "No EGR", the amount of exhaust gas supplied to the turbocharger side in the system 1 becomes the largest. When in "Low load" and "High EGR", the amount of exhaust gas supplied to the turbocharger side in the system 1 becomes the smallest. Herein, this smallest amount of exhaust gas is set to 20% of the largest amount of exhaust gas. The capacity of the small-capacity second turbocharger 6B is set such that the high turbocharging performance can be achieved under this circumstance. Here, this percentage is just one example, and the capacity of the second turbocharger 6B is suitably changed based on this percentage.

The total of the capacities of the first and second turbochargers 6A and 6B are set such that the high turbocharging performance can be achieved when in "High load" and "No EGR", that is, when the amount of exhaust gas introduced to the turbocharger side becomes the largest. Since the second turbocharger 6B handles 20% of this largest amount of exhaust gas, the capacity of the first turbocharger 6A is set such that the high turbocharging performance can be achieved when the remaining 80% is supplied to the first turbocharger 6A.

As above, the operation modes of the turbochargers 6A and 6B are determined based on the amount of exhaust gas supplied to the turbocharger side, and in addition, the capacities of the turbochargers 6A and 6B, the amount of exhaust gas supplied being determined based on the load of the internal combustion engine 2 and the EGR ratio.

When in "Low load" and "No EGR" or "Low EGR", the amount of exhaust gas supplied to the turbocharger side decreases. Therefore, only the first turbocharger 6A is activated, and the opening degree of the variable nozzle 9A is changed based on the transition of the amount of exhaust gas. With this, the turbocharger performance can be maintained as high as possible.

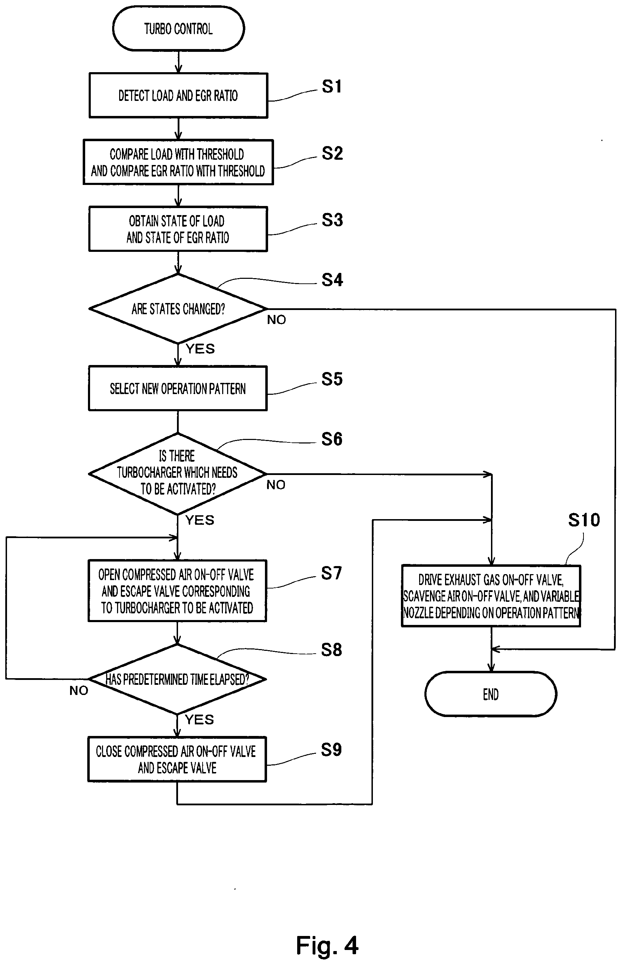

Next, the procedure of the turbo control executed by the turbo controller 33 will be explained in reference to Fig. 4. The flow shown in Fig. 4 is performed by the turbo controller 33 in each predetermined control period. First, the turbo controller 33 detects the load of the internal combustion engine 2 and the EGR ratio based on the inputs from the load controller 31 and the EGR controller 32 (Step S1). The turbo controller 33 compares the detected load and EGR ratio with the load threshold and EGR threshold (Step S2) to obtain which state the load of the internal combustion engine 2 is, "High load" or "Low load" and which state the EGR ratio is, "No EGR", "Low EGR", "Middle EGR", or "High EGR" (Step S3).

Next, the turbo controller 33 determines whether or not the states obtained this time are changed from the states obtained previous time (Step S4). If the states are not changed (No in S4), the turbo controller 33 terminates the process and continues the current operation mode of the turbocharger. If the states are changed (Yes in S4), the turbo controller 33 selects a new operation mode of the turbocharger based on the states obtained this time and the correspondence relations shown in Fig. 3 (Step S5).

Then, the turbo controller 33 compares the current operation mode of the turbocharger with the newly selected operation mode of the turbocharger and determines based on this comparison whether or not there exists a turbocharger which is currently in a stop state but needs to be activated based on the newly selected operation mode (Step S6). To be specific, for example, in a case where the states change from "High load" and "High EGR" to "High load" and "Low EGR" while a predetermined control period elapses from the execution of the previous process, the second turbocharger 6B needs to be newly activated. Moreover, in a case where the states change from "High load" and "No EGR" to "High load" and "Low EGR", the operation mode of the turbocharger is changed, but there is no turbocharger which needs to be newly activated.

When there is no turbocharger which needs to be activated (No in S6), the turbo controller 33 drives the exhaust gas on-off valves 14A and 14B, the scavenge air on-off valves 24A and 24B, and the variable nozzle 9A based on the selected operation mode (Step S10), and then terminates the process.

When there exists the turbocharger which needs to be newly activated (Yes in S6), the turbo controller 33 performs drive control of the branched compressed air on-off valve and the escape valve so as to open the branched compressed air passage and escape passage used for the prerotation and corresponding to this turbocharger (Step S7). Then, the turbo controller 33 determines whether or not a predetermined time has elapsed since the execution of the above drive control (Step S8).

While the above state where each of the passages opens or closes continues for a predetermined time, the compressed air from the reservoir 16 is supplied to the turbocharger which needs to be activated, and the prerotation of the turbine of the turbocharger is performed by the compressed air. With this, the prerotation of the compressor is also performed, and the air is compressed. The pressure of the compressed air generated by this prerotation tends to be lower than the required scavenge air pressure of the internal combustion engine 2 in operation. Here, in order to prevent the back flow from the scavenge air passage to the compressor, the scavenge air on-off valve of the branched scavenge air passage is closed to insulate the turbocharger from the internal combustion engine 2. At the same time, the escape valve opens to open the escape passage, thereby releasing the low-pressure compressed air generated by the prerotation. Thus, the occurrence of surging is prevented. Moreover, since the compressed air utilized for the prerotation is supplied from a line formed independently from the exhaust gas passage 3, it is not necessary to utilize the exhaust gas for the prerotation of the turbocharger. Therefore, the EGR ratio is not influenced by the activation of the turbocharger. Thus, it is possible to prevent the activation of the turbocharger from interfering with the EGR control, and the amount of NOx emission can be maintained at the desired value.

When it is determined in Step S8 that the predetermined time has elapsed (Yes in S8), the turbo controller 33 drives the compressed air on-off valve and the escape valve so as to close the branched compressed air passage and the escape passage (Step S9), proceeds to Step S10, drives the exhaust gas on-off valve and the scavenge air on-off valve so as to open the branched exhaust gas passage and the branched scavenge air passage, and terminates the process. With this, the exhaust gas in the exhaust gas passage 3 is supplied to the turbocharger having performed the prerotation, and this turbocharger smoothly operates based on the flow rate of the exhaust gas.

The foregoing has explained the embodiment of the present invention. The above configuration is suitably changeable within the spirit of the present invention. The number of turbochargers is not limited to two, and the system may include three or more turbochargers connected in parallel to each of the exhaust gas passage and the scavenge air or charge air passage. The number of turbochargers including the variable nozzle is not limited to one, and each of a plurality of turbochargers may include the variable nozzle. The capacities of the turbochargers do not have to be different from each other and may be the same as each other.

Moreover, each of the scrubber, the blower, and the EGR gas cooler on the EGR passage is provided according to need and may be suitably omitted.

In the present embodiment, the internal combustion engine is applied to the marine two-cycle diesel engine but may be applied to four-cycle engines and gasoline engines for other applications. The EGR ratio of the diesel engine tends to be set to be higher than the EGR ratio of the gasoline engine which utilizes a three-way catalyst to reduce the NOx emission ratio. Therefore, the system configured to determine the operation mode of the turbocharger using the EGR ratio as an input parameter is preferably applicable to the diesel engine.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art.

### Industrial Applicability

The present invention is the internal combustion engine with the turbochargers using the high-pressure EGR technology of recirculating the exhaust gas before the exhaust gas passes through the turbocharger and has an operational advantage of achieving the high turbocharging performance based on the operation state. Applying the present invention to, for example, a marine diesel engine is useful.

### Reference Signs List

1 exhaust gas recirculation system
2 internal combustion engine
3 exhaust gas passage
4 integrated exhaust gas passage
5A, 5B branched exhaust gas passage
6A first turbocharger
6B second turbocharger
9A variable nozzle
10 scavenge air passage
11A, 11B branched scavenge air passage
12 integrated scavenge air passage
14A, 14B exhaust gas on-off valve
16 reservoir
17 compressed air passage
22A, 22B escape passage
23A, 23B escape valve
24A, 24B scavenge air on-off valve
25 EGR passage
26 EGR valve
30 controller
33 turbo controller

## Claims

1. An exhaust gas recirculation system for an internal combustion engine (2) with a plurality of turbochargers (6A, 6B), comprising:
an exhaust gas passage (3) configured to introduce an exhaust gas from the internal combustion engine;
the plurality of turbochargers connected in parallel to the exhaust gas passage;
a charge air or scavenge air passage (10) configured to supply a compressed gas to the internal combustion engine, the compressed gas being generated by the plurality of turbochargers;
an EGR passage (25) configured to connect a portion, located upstream of the turbocharger, of the exhaust gas passage and a portion, located downstream of the turbocharger, of the charge air or scavenge air passage; and
a control device (30) configured to adjust an EGR ratio that is a ratio of the amount of exhaust gas flowing through the EGR passage to the total amount of exhaust gas,
**characterized in that**
the control device (30) is further configured to detect a load of the internal combustion engine (2) and the EGR ratio, compare the detected load of the internal combustion engine with a threshold, compare the detected EGR ratio with a threshold, and determine whether to-cause each of the plurality of turbochargers (6) to operate based on results of the comparisons.

2. The exhaust gas recirculation system according to claim 1, wherein at least one (6A) of the plurality of turbochargers (6) is provided with a variable nozzle (9A) configured to adjust pressure of the compressed gas generated by the turbocharger.

3. The exhaust gas recirculation system according to claim 1, wherein the exhaust gas passage (3) includes an exhaust gas integrated passage (4) extending from the internal combustion engine (2) and a plurality of branched exhaust gas passages (5A, 5B) which are branched from the exhaust gas integrated passage and respectively connected to the plurality of turbochargers (6A, 6B),
the exhaust gas recirculation system further comprising exhaust gas on-off valves (14A, 14B) respectively disposed on the branched exhaust gas passages, wherein
the control device (30) drives the plurality of exhaust gas on-off valves to open the branched exhaust gas passage connected to the turbocharger (6A, 6B) which needs to operate and to close the branched exhaust gas passage connected to the turbocharger which needs to be stopped.

4. The exhaust gas recirculation system according to claim 1, wherein the charge air or scavenge air passage (10) includes a plurality of branched passages (11A, 11B) respectively connected to the plurality of turbochargers (6A, 6B) and an integrated passage (12) extending toward the internal combustion engine (2) from where the plurality of branched passages meet,
the exhaust gas recirculation system further comprising on-off valves (24A, 24B) respectively disposed on the branched passages, wherein
the control device (30) drives the plurality of on-off valves to open the branched passage connected to the turbocharger which needs to operate and to close the branched passage connected to the turbocharger which needs to be stopped.

5. The exhaust gas recirculation system according to claim 1, further comprising a compressed air passage (17) formed independently from the exhaust gas passage (3) to supply compressed air for prerotation to the plurality of turbochargers (6A, 6B), wherein
when starting the turbocharger which needs to operate, the control device (30) supplies, in a predetermined period of time, the compressed air for the prerotation through the compressed air passage to the turbocharger.

6. The exhaust gas recirculation system according to claim 5, further comprising:
a plurality of escape passages (22A, 22B) respectively connected to downstream sides of compressors (8A, 8B) of the plurality of turbochargers (6A, 6B) to release the compressed gas from the turbochargers to atmosphere; and
escape valves (23A, 23B) respectively disposed on the escape passages, wherein:
while the predetermined period of time elapses, the control device (30) drives the escape valve to open the escape passage corresponding to the turbocharger which needs to-operate; and
after the predetermined period of time has elapsed, the control device drives the escape valve to close the escape passage.

7. The exhaust gas recirculation system according to claim 1, wherein the charge air or scavenge air passage (10) includes a plurality of branched passages (11A, 11B) respectively connected to the plurality of turbochargers (6A, 6B) and an integrated passage (12) extending toward the internal combustion engine (2) from where the plurality of branched passages meet,
the exhaust gas recirculation system further comprising:
on-off valves (24A, 24B) respectively disposed on the branched passages;
a compressed air passage (17) formed independently from the exhaust gas passage to supply compressed air for prerotation to the plurality of turbochargers;
a plurality of escape passages (22A, 22B) respectively connected to downstream sides of compressors (8A, 8B) of the plurality of turbochargers to release the compressed gas from the turbochargers to atmosphere; and
escape valves (23A, 23B) respectively disposed on the escape passages, wherein:
when starting the turbocharger which needs to operate, the control device (30) supplies, in a predetermined period of time, the compressed air for the prerotation through the compressed air passage to the turbocharger;
while at least the predetermined period of time elapses, the control device drives the escape valve to open the escape passage corresponding to the turbocharger which needs to_operate and drives the on-off valve to close the branched passage connected to the turbocharger which needs to operate; and
after the predetermined period of time has elapsed, the control device drives the escape valve to close the escape passage and drives the on-off valve to open the branched passage.

8. The exhaust gas recirculation system according to claim 1, wherein the plurality of turbochargers (6A, 6B) are the same in capacity as one another.

9. The exhaust gas recirculation system according to claim 1, wherein the plurality of turbochargers (6A, 6B) are different in capacity from one another.

10. The exhaust gas recirculation system according to claim 9, wherein:
the control device (30) adjusts the EGR ratio within a range between a predetermined lower limit and a predetermined upper limit; and
a capacity of a smallest-capacity turbocharger (6A, 6B) among the plurality of turbochargers is set based on a flow rate of the exhaust gas introduced to the smallest-capacity turbocharger when the load of the internal combustion engine (2) is a low load and the EGR ratio is adjusted to the upper limit.

11. The exhaust gas recirculation system according to claim 9, wherein:
the plurality of turbochargers are constituted by a first turbocharger (6A) and a second turbocharger (6B) which is smaller in capacity than the first turbocharger; and
based on the load of the internal combustion engine (2) and the EGR ratio, the control device (30) selects one of a state where both the first and second turbochargers operate, a state where only the first turbocharger operates, and a state where only the second turbocharger operates.

12. The exhaust gas recirculation system according to claim 11, further comprising a variable nozzle (9A) configured to adjust pressure of the compressed gas supplied from the first turbocharger (6A), wherein:
when the EGR ratio is zero, the control device (30) causes at least the first turbocharger to operate; and
when the EGR ratio is higher than zero and lower than a predetermined EGR threshold, the control device causes at least the first turbocharger to operate and causes the variable nozzle to operate such that the pressure of the compressed gas from the first turbocharger becomes equal to or higher than a predetermined required pressure.

13. The exhaust gas recirculation system according to claim 11, wherein:
when the load of the internal combustion engine (2) is equal to or higher than a predetermined load threshold and the EGR ratio is lower than a predetermined EGR threshold, the control device (30) causes both the first and second turbochargers (6A, 6B) to operate; and
when the load of the internal combustion engine is equal to or higher than the predetermined load threshold and the EGR ratio is equal to or higher than the EGR threshold, the control device causes only the first turbocharger (6A) to operate.

14. The exhaust gas recirculation system according to claim 11, wherein:
when the load of the internal combustion engine (2) is lower than a predetermined load threshold and the EGR ratio is lower than a predetermined EGR threshold, the control device (30) causes only the first turbocharger (6A) to operate; and
when the load of the internal combustion engine is lower than the predetermined load threshold and the EGR ratio is equal to or higher than the EGR threshold, the control device- causes only the second turbocharger (6B) to operate.

## Patentansprüche

1. Abgasrückführungssystem für einen Verbrennungsmotor (2) mit einer Mehrzahl von Turboladern (6A, 6B), wobei das System umfasst:
einen Abgasdurchgang (3), der dazu konfiguriert ist, ein Abgas aus dem Verbrennungsmotor zuzuführen;
die Mehrzahl von Turboladern, die parallel zu dem Abgasdurchgang verbunden sind;
einen Ladeluft- oder Spülluftdurchgang (10), der dazu konfiguriert ist, ein Druckgas an den Verbrennungsmotor zuzuführen, wobei das Druckgas durch die Mehrzahl von Turboladern erzeugt wird;
einen AGR-Durchgang (25), der dazu konfiguriert ist, einen stromaufwärts des Turboladers angeordneten Abschnitt des Abgasdurchgangs mit einem stromabwärts des Turboladers angeordneten Abschnitt des Ladeluft- oder Spülluftdurchgangs zu verbinden; und
eine Steuervorrichtung (30), die dazu konfiguriert ist, ein AGR-Verhältnis zu steuern, bei dem es sich um das Verhältnis der Menge von Abgas, die durch den AGR-Durchgang strömt, zu der gesamten Menge von Abgas handelt,
**dadurch gekennzeichnet, dass**
die Steuervorrichtung (30) weiterhin dazu konfiguriert ist, eine Last des Verbrennungsmotors (2) und das AGR-Verhältnis zu ermitteln, die ermittelte Last des Verbrennungsmotors mit einem Grenzwert zu vergleichen, das ermittelte AGR-Verhältnis mit einem Grenzwert zu vergleichen, und basierend auf den Ergebnissen der Vergleiche zu bestimmen, ob jeder aus der Mehrzahl von Turboladern (6) arbeiten soll.

2. Abgasrückführungssystem gemäß Anspruch 1, wobei wenigstens einer (6A) aus der Mehrzahl von Turboladern (6) mit einer variablen Düse (9A) versehen ist, die dazu konfiguriert ist, den Druck des durch den Turbolader erzeugten Druckgases einzustellen.

3. Abgasrückführungssystem gemäß Anspruch 1, wobei der Abgasdurchgang (3) umfasst:
einen integrierten Abgasdurchgang (4), der sich von dem Verbrennungsmotor (2) erstreckt, und eine Mehrzahl von verzweigten Abgasdurchgängen (5A, 5B), die von dem integrierten Abgasdurchgang verzweigt sind und jeweils mit der Mehrzahl von Turboladern (6A, 6B) verbunden sind,
wobei das Abgasrückführungssystem weiterhin Abgas-Ein-/Aus-Ventile (14A, 14B) umfasst, die jeweils an den verzweigten Abgasdurchgängen angeordnet sind, wobei
die Steuervorrichtung (30) die Mehrzahl von Abgas-Ein-/Aus-Ventilen dazu antreibt, den verzweigten Abgasdurchgang zu öffnen, der mit dem Turbolader (6A, 6B) verbundenen ist, welcher arbeiten soll, und den verzweigten Abgasdurchgang zu schließen, der mit dem Turbolader verbunden ist, welcher gestoppt werden soll.

4. Abgasrückführungssystem gemäß Anspruch 1, wobei der Ladeluft- oder Spülluftdurchgang (10) umfasst: eine Mehrzahl von verzweigten Durchgängen (11A, 11B), die jeweils mit der Mehrzahl von Turboladern (6A, 6B) verbunden sind, und einen integrierten Durchgang (12), der sich von der Stelle, an der die Mehrzahl von verzweigten Durchgängen zusammentrifft, in Richtung des Verbrennungsmotors (2) erstreckt,
wobei das Abgasrückführungssystem weiterhin Ein-/Aus-Ventile (24A, 24B) umfasst, die jeweils an den verzweigten Durchgängen angeordnet sind, wobei
die Steuervorrichtung (30) die Mehrzahl von Ein-/Aus-Ventilen dazu antreibt, den verzweigten Durchgang zu öffnen, der mit dem Turbolader verbundenen ist, welcher arbeiten soll, und den verzweigten Durchgang zu schließen, der mit dem Turbolader verbunden ist, welcher gestoppt werden soll.

5. Abgasrückführungssystem gemäß Anspruch 1, das weiterhin umfasst: einen Druckluftdurchgang (17), der unabhängig von dem Abgasdurchgang (3) ausgeformt ist, um Druckluft für eine Vordrehung an die Mehrzahl von Turboladern (6A, 6B) zuzuführen, wobei wenn der Turbolader, welcher arbeiten soll, gestartet wird, die Steuervorrichtung (30) in einem vorbestimmten Zeitraum die Druckluft für die Vordrehung durch den Druckluftdurchgang an den Turbolader zuführt.

6. Abgasrückführungssystem gemäß Anspruch 5, das weiterhin umfasst:
eine Mehrzahl von Entweichungsdurchgängen (22A, 22B), die jeweils mit stromabwärts liegenden Seiten von Kompressoren (8A, 8B) der Mehrzahl von Turboladern (6A, 6B) verbunden sind, um das Druckgas aus den Turboladern in die Atmosphäre entweichen zu lassen; und
Entweichungsventile (23A, 23B), die jeweils an den Entweichungsdurchgängen angeordnet sind, wobei:
während der vorbestimmte Zeitraum abläuft, die Steuervorrichtung (30) das Entweichungsventil dazu antreibt, den Entweichungsdurchgang zu öffnen, der mit dem Turbolader verbunden ist, welcher arbeiten soll; und
nachdem der vorbestimmte Zeitraum abgelaufen ist, die Steuervorrichtung das Entweichungsventil dazu antreibt, den Entweichungsdurchgang zu schließen.

7. Abgasrückführungssystem gemäß Anspruch 1, wobei der Ladeluft- oder Spülluftdurchgang (10) umfasst: eine Mehrzahl von verzweigten Durchgängen (11A, 11B), die jeweils mit der Mehrzahl von Turboladern (6A, 6B) verbunden sind, und einen integrierten Durchgang (12), der sich von der Stelle, an der die Mehrzahl von verzweigten Durchgängen zusammentrifft, in Richtung des Verbrennungsmotors (2) erstreckt,
wobei das Abgasrückführungssystem weiterhin umfasst:
Ein-/Aus-Ventile (24A, 24B), die jeweils an den verzweigten Durchgängen angeordnet sind;
ein Druckluftdurchgang (17), der unabhängig von dem Abgasdurchgang ausgeformt ist, um Druckluft für eine Vordrehung an die Mehrzahl von Turboladern zuzuführen;
eine Mehrzahl von Entweichungsdurchgängen (22A, 22B), die jeweils mit stromabwärts liegenden Seiten von Kompressoren (8A, 8B) der Mehrzahl von Turboladern verbunden sind, um das Druckgas aus den Turboladern in die Atmosphäre entweichen zu lassen; und
Entweichungsventile (23A, 23B), die jeweils an den Entweichungsdurchgängen angeordnet sind, wobei:
wenn der Turbolader, welcher arbeiten soll, gestartet wird, die Steuervorrichtung (30) in einem vorbestimmten Zeitraum die Druckluft für die Vordrehung durch den Druckluftdurchgang an den Turbolader zuführt;
während wenigstens der vorbestimmte Zeitraum abläuft, die Steuervorrichtung das Entweichungsventil dazu antreibt, den Entweichungsdurchgang zu öffnen, der mit dem Turbolader verbunden ist, welcher arbeiten soll, und das Ein-/Aus-Ventil dazu antreibt, den verzweigten Durchgang zu schließen, der mit dem Turbolader verbunden ist, welcher arbeiten soll; und
nachdem der vorbestimmte Zeitraum abgelaufen ist, die Steuervorrichtung das Entweichungsventil dazu antreibt, den Entweichungsdurchgang zu schließen, und das Ein-/Aus-Ventil dazu antreibt, den verzweigten Durchgang zu schließen.

8. Abgasrückführungssystem gemäß Anspruch 1, wobei die Mehrzahl von Turboladern (6A, 6B) jeweils die gleiche Kapazität wie die anderen aufweist.

9. Abgasrückführungssystem gemäß Anspruch 1, wobei die Mehrzahl von Turboladern (6A, 6B) sich in ihrer Kapazität jeweils voneinander unterscheiden.

10. Abgasrückführungssystem gemäß Anspruch 9, wobei:
die Steuervorrichtung (30) das AGR-Verhältnis in einem Bereich zwischen einer vorbestimmten Untergrenze und einer vorbestimmten Obergrenze einstellt; und
die Kapazität eines Turboladers (6A, 6B) mit der kleinsten Kapazität aus der Mehrzahl von Turboladern basierend auf einer Durchflussrate des Abgases eingestellt wird, das in den Turbolader mit der kleinsten Kapazität eingeführt wird, wenn die Last des Verbrennungsmotors (2) niedrig ist und das AGR-Verhältnis auf die Obergrenze eingestellt ist.

11. Abgasrückführungssystem gemäß Anspruch 9, wobei:
die Mehrzahl von Turboladern aus einem ersten Turbolader (6A) und einem zweiten Turbolader (6B), der eine geringere Kapazität als der erste Turbolader aufweist, gebildet wird; und
basierend auf der Last des Verbrennungsmotors (2) und dem AGR-Verhältnis die Steuervorrichtung (30) auswählt: entweder einen Zustand, in dem sowohl der erste als auch der zweite Turbolader arbeiten, einen Zustand, in dem nur der erste Turbolader arbeitet, oder einen Zustand, in dem nur der zweite Turbolader arbeitet.

12. Abgasrückführungssystem gemäß Anspruch 11, das weiterhin umfasst: eine variable Düse (9A), die dazu konfiguriert ist, den Druck des Druckgases, das von dem ersten Turbolader (6A) zugeführt wird, einzustellen, wobei:
wenn das AGR-Verhältnis Null ist, die Steuervorrichtung (30) bewirkt, dass wenigstens der erste Turbolader arbeitet; und
wenn das AGR-Verhältnis größer als Null und kleiner als ein vorbestimmter AGR-Grenzwert ist, die Steuervorrichtung bewirkt, dass wenigstens der erste Turbolader arbeitet, und veranlasst, dass die variable Düse derart arbeitet, dass der Druck des Druckgases aus dem ersten Turbolader größer oder gleich einem vorbestimmten erforderlichen Druck wird.

13. Abgasrückführungssystem gemäß Anspruch 11, wobei:
wenn die Last des Verbrennungsmotors (2) größer oder gleich einem vorbestimmten Lastgrenzwert ist und das AGR-Verhältnis kleiner als ein vorbestimmter AGR-Grenzwert ist, die Steuervorrichtung (30) bewirkt, dass sowohl der erste, als auch der zweite Turbolader (6A, 6B) arbeiten; und
wenn die Last des Verbrennungsmotors größer oder gleich dem vorbestimmten Lastgrenzwert ist und das AGR-Verhältnis größer oder gleich dem vorbestimmten AGR-Grenzwert ist, die Steuervorrichtung (30) bewirkt, dass nur der erste Turbolader (6A) arbeitet.

14. Abgasrückführungssystem gemäß Anspruch 11, wobei:
wenn die Last des Verbrennungsmotors (2) kleiner als ein vorbestimmter Lastgrenzwert ist und das AGR-Verhältnis kleiner als ein vorbestimmter AGR-Grenzwert ist, die Steuervorrichtung (30) bewirkt, dass nur der erste Turbolader (6A) arbeitet; und
wenn die Last des Verbrennungsmotors kleiner als der vorbestimmte Lastgrenzwert ist und das AGR-Verhältnis größer oder gleich dem vorbestimmten AGR-Grenzwert ist, die Steuervorrichtung bewirkt, dass nur der zweite Turbolader (6B) arbeitet.

## Revendications

1. Système de recirculation de gaz d'échappement pour un moteur à combustion interne (2) comportant une pluralité de turbocompresseurs (6A, 6B), comprenant :
un passage de gaz d'échappement (3) conçu pour introduire un gaz d'échappement provenant du moteur à combustion interne,
la pluralité de turbocompresseurs reliés en parallèle au passage de gaz d'échappement,
un passage d'air de charge ou de récupération (10) conçu pour apporter un gaz comprimé au moteur à combustion interne, le gaz comprimé étant produit par la pluralité de turbocompresseurs,
un passage RGE (25) conçu pour relier une partie, située en amont du turbocompresseur, du passage de gaz d'échappement et une partie, située en aval du turbocompresseur, du passage d'air de charge ou de récupération, et
un dispositif de commande (30) conçu pour régler un rapport RGE consistant en un rapport entre la quantité de gaz d'échappement s'écoulant dans le passage RGE et la quantité totale de gaz d'échappement,
**caractérisé en ce que**
le dispositif de commande (30) est conçu en outre pour détecter une charge du moteur à combustion interne (2) et le rapport RGE, comparer la charge détectée du moteur à combustion interne à une valeur seuil, comparer le rapport RGE détecter à une valeur seuil, et déterminer s'il y a lieu d'amener chacun des turbocompresseurs (6) à fonctionner compte tenu du résultat des comparaisons.

2. Système de recirculation de gaz d'échappement selon la revendication 1, dans lequel au moins un (6A) de la pluralité de turbocompresseurs (6) est pourvu d'un gicleur variable (9A) conçu pour régler la pression du gaz comprimé produit par le turbocompresseur.

3. Système de recirculation de gaz d'échappement selon la revendication 1, dans lequel le passage de gaz d'échappement (3) comprend un passage de gaz d'échappement intégré (4) partant du moteur à combustion interne (2) et une pluralité de ramifications constituant des passages de gaz d'échappement (5A, 5B) partant du passage de gaz d'échappement intégré et respectivement reliés à la pluralité de turbocompresseurs (6A, 6B),
le système de recirculation de gaz d'échappement comprenant en outre des vannes marche-arrêt de gaz d'échappement (14A, 14B) respectivement situées sur les ramifications constituant les passages de gaz d'échappements ;
ledit dispositif de commande (30) pilotant la pluralité de vannes marche-arrêt de gaz d'échappement de manière qu'elles ouvrent la ramification constituant le passage de gaz d'échappement qui est relié au turbocompresseur (6A, 6B) devant fonctionner et de manière qu'elles ferment la ramification constituant le passage de gaz d'échappement qui est relié au turbocompresseur devant être arrêté.

4. Système de recirculation de gaz d'échappement selon la revendication 1, dans lequel le passage d'air de charge ou de récupération (10) comporte une pluralité de ramifications constituant des passages (11A, 11B) respectivement reliés à la pluralité de turbocompresseurs (6A, 6B) et un passage intégré (12) s'étendant vers le moteur à combustion interne (2) à partir du point de jonction de la pluralité de ramifications constituant des passages,
le système de recirculation de gaz d'échappement comprenant en outre des vannes marche-arrêt (24A, 24B) respectivement situées sur les ramifications constituant les passages,
ledit dispositif de commande (30) pilotant la pluralité de vannes marche-arrêt de manière qu'elles ouvrent la ramification constituant le passage relié au turbocompresseur devant fonctionner et qu'elles ferment la ramification constituant le passage relié au turbocompresseur devant être arrêté.

5. Système de recirculation de gaz d'échappement selon la revendication 1, comprenant en outre un passage d'air comprimé (17) formé indépendamment du passage de gaz d'échappement (3) pour fournir de l'air comprimé, destiné à une prérotation, à la pluralité de turbocompresseurs (6A, 6B), dans lequel
lors du démarrage du turbocompresseur devant fonctionner, le dispositif de commande (30) apporte, pendant une période prédéterminée, l'air comprimé destiné à la prérotation, par le passage d'air comprimé, au turbocompresseur.

6. Système de recirculation de gaz d'échappement selon la revendication 5, comprenant en outre :
une pluralité de passages d'évacuation (22A, 22B) respectivement reliés aux côtés aval de compresseurs (8A, 8B) de la pluralité de turbocompresseurs (6A, 6B) pour évacuer le gaz comprimé des turbocompresseurs vers l'atmosphère, et
des vannes d'évacuation (23A, 23B) respectivement situées sur les passages d'évacuatian ; dans lequel :
pendant que la période prédéterminée s'écoule, le dispositif de commande (30) pilote la vanne d'évacuation de manière à ouvrir le passage d'évacuation correspondant avec le turbocompresseur devant fonctionner, et
après que la période prédéterminée s'est écoulée, le dispositif de commande pilote la vanne d'évacuation de manière à fermer le passage d'évacuation.

7. Système de recirculation de gaz d'échappement selon la revendication 1, dans lequel le passage d'air de charge ou de récupération (10) comporte une pluralité de ramifications constituant des passages (11A, 11B) respectivement reliés à la pluralité de turbocompresseurs (6A, 6B), et un passage intégré (12) s'étendant vers le moteur à combustion interne (2) à partir du point de jonction de la pluralité de ramifications constituant des passages,
le système de recirculation de gaz d'échappement comprenant en outre :
des vannes marche-arrêt (24A, 24B) respectivement situées sur les ramifications constituant les passages,
un passage d'air comprimé (17) formé indépendamment du passage de gaz d'échappement pour fournir de l'air comprimé, destiné à une prérotation, à la pluralité de turbocompresseurs,
une pluralité de passages d'évacuation (22A, 22B) respectivement reliés aux côtés aval de compresseurs (8A, 8B) de la pluralité de turbocompresseurs pour évacuer le gaz comprimé des turbocompresseurs vers l'atmosphère, et
des vannes d'évacuation (23A, 23B) respectivement situées sur les passages d'évacuation ; dans lequel :
lors du démarrage du turbocompresseur devant fonctionner, le dispositif de commande (30) apporte, pendant une période prédéterminée, l'air comprimé destiné à la prérotation, par le passage d'air comprimé, au turbocompresseur,
pendant qu'au moins la période prédéterminée s'écoule, le dispositif de commande pilote la vanne d'évacuation de manière à ouvrir le passage d'évacuation correspondant avec le turbocompresseur devant fonctionner, et pilote la vanne marche-arrêt de manière qu'elle ferme la ramification constituant le passage relié au turbocompresseur devant fonctionner, et
après que la période prédéterminée s'est écoulée, le dispositif de commande pilote la vanne d'évacuation de manière qu'elle ferme le passage d'évacuation, et pilote la vanne marche-arrêt de manière à ouvrir la ramification constituant le passage.

8. Système de recirculation de gaz d'échappement selon la revendication 1, dans lequel la pluralité de turbocompresseurs (6A, 6B) ont la même capacité les uns les autres.

9. Système de recirculation de gaz d'échappement selon la revendication 1, dans lequel la pluralité de turbocompresseurs (6A, 6B) ont des capacités différentes les uns des autres.

10. Système de recirculation de gaz d'échappement selon la revendication 9, dans lequel :
le dispositif de commande (30) règle le rapport RGE dans une plage comprise entre une limite inférieure prédéterminée et une limite supérieure prédéterminée, et
la capacité du turbocompresseur (6A, 6B) présentant la plus petite capacité parmi la pluralité de turbocompresseurs est établie en fonction du débit du gaz d'échappement introduit dans le turbocompresseur présentant la plus petite capacité lorsque la charge du moteur à combustion interne (2) est une faible charge et que le rapport RGE est réglé à la limite supérieure.

11. Système de recirculation de gaz d'échappement selon la revendication 9, dans lequel :
la pluralité de turbocompresseurs est constituée par un premier turbocompresseur (6A) et un deuxième turbocompresseur (6B) qui est de plus petite capacité que le premier turbocompresseur, et
en fonction de la charge du moteur à combustion interne (2) et du rapport RGE, le dispositif de commande (30) choisit un état dans lequel les deux (le premier et le deuxième) turbocompresseurs fonctionnent, un état dans lequel seul le premier turbocompresseur fonctionne, ou un état dans lequel seul le deuxième turbocompresseur fonctionne.

12. Système de recirculation de gaz d'échappement selon la revendication 11, comprenant en outre un gicleur variable (9A) conçu pour régler la pression du gaz comprimé fourni par le premier turbocompresseur (6A), dans lequel :
lorsque le rapport RGE est de zéro, le dispositif de commande (30) amène au moins le premier turbocompresseur à fonctionner, et
lorsque le rapport RGE est supérieur à zéro et inférieur à une valeur seuil RGE prédéterminée, le dispositif de commande amène au moins le premier turbocompresseur à fonctionner et amène le gicleur variable à fonctionner de manière que la pression du gaz comprimé issu du premier turbocompresseur soit égale ou supérieure à une pression requise prédéterminée,

13. Système de recirculation de gaz d'échappement selon la revendication 11, dans lequel :
lorsque la charge du moteur à combustion interne (2) est égale ou supérieure à une valeur seuil de charge prédéterminée et que le rapport RGE est inférieur à une valeur seuil RGE prédéterminée, le dispositif de commande (30) amène le premier et le deuxième turbocompresseur (6A, 6B) à fonctionner, et
lorsque la charge du moteur à combustion interne est égale ou supérieure à la valeur seuil de charge prédéterminée et que le rapport RGE est égal ou supérieur à la valeur seuil RGE, le dispositif de commande amène uniquement le premier turbocompresseur (6A) à fonctionner.

14. Système de recirculation de gaz d'échappement selon la revendication 11, dans lequel :
lorsque la charge du moteur à combustion interne (2) est inférieure à une valeur seuil de charge prédéterminée et que le rapport RGE est inférieur à une valeur seuil RGE prédéterminée, le dispositif de commande (30) amène uniquement le premier turbocompresseur (6A) à fonctionner, et
lorsque la charge du moteur à combustion interne est inférieure à la valeur seuil de charge prédéterminée et que le rapport RGE est égal ou supérieur à la valeur seuil RGE, le dispositif de commande amène uniquement le deuxième turbocompresseur (6B) à fonctionner.
